Europäisches Patentamt

European Patent Office

Office européen des brevets

(19)

(11) Veröffentlichungsnummer: **0 302 409**
**A2**

# (12) EUROPÄISCHE PATENTANMELDUNG

(21) Anmeldenummer: **88112343.4**

(22) Anmeldetag: **29.07.88**

(51) Int. Cl.⁴: **B62M 11/06**

(30) Priorität: **03.08.87 DE 3725643**

(43) Veröffentlichungstag der Anmeldung:
**08.02.89 Patentblatt 89/06**

(84) Benannte Vertragsstaaten:
**BE CH DE ES FR LI**

(71) Anmelder: **Fichtel & Sachs AG**
**Ernst-Sachs-Strasse 62**
**D-8720 Schweinfurt(DE)**

(72) Erfinder: **Seibt, Hans**
**Riemenschneiderweg 3**
**D-8726 Gochsheim(DE)**
Erfinder: **Kurz, Walter, Prof. Dr.**
**Mittagstrasse 4**
**D-8968 Durach(DE)**
Erfinder: **Troch, Günter**
**Gochsheimer Weg 12**
**D-8721 Schwebheim(DE)**

(74) Vertreter: **Liska, Horst, Dr. et al**
**Patentanwälte H. Weickmann, Dr. K. Fincke,**
**F.A. Weickmann, B. Huber, Dr. H. Liska, Dr. J.**
**Prechtel Möhlstrasse 22 Postfach 86 08 20**
**D-8000 München 86(DE)**

(54) **Getriebe-Kupplungs-Einheit für ein Zweirad-Kraftfahrzeug.**

(57) Die Getriebe-Kupplungs-Einheit für Zweirad-Kraftfahrzeug umfaßt ein Gehäuse (11), in welchem zueinander drehbar eine Eingangswelle (13), eine Ausgangswelle (27) und eine Zwischenwelle (43) drehbar gelagert sind. Mit der Eingangswelle (13) ist eine insbesondere als Fliehkraftkupplung ausgebildete Anfahrkupplung (19) verbunden, die ihrerseits über zwei Gebriebe-Antriebswege mit unterschiedlichem Untersetzungsverhältnis mit der Ausgangswelle (27) verbunden ist. Der erste Getriebe-Antriebsweg führt über die Zwischenwelle (43) und eine Freilaufkupplung (47) zur Ausgangswelle (27). Der zweite Getriebe-Antriebsweg enthält eine als Reibungskupplung ausgebildete Gangwechselkupplung (61) mit zwei gleichachsig auf der Ausgangswelle (27) angeordneten Kupplungsorganen (67, 71), von denen ein erstes mittels eines Betätigungsvorrichtung manuell verschiebbares Kupplungsorgan (71) federnd in seine Auskuppelstellung vorgespannt ist. Das erste Kupplungsorgan (71) ist über ein Steilgewinde (69) mit der Ausgangswelle (27) verbunden und wird von dem in der Einkuppelstellung übertragenen Reibdrehmoment zum zweiten Kupplungsorgan (67) hin geschraubt. Die Gangwechselkupplung (61) kann damit nur bei Drehmomententlastung der Brennkraftmaschine (1) ausgekuppelt werden, wodurch beim Zurückschalten vom zweiten auf den ersten Gang eine unerwünschte Drehzahlerhöhung der Brennkraftmaschine vermieden wird.

FIG.1

## Getriebe-Kupplungs-Einheit für ein Zweirad-Kraftfahrzeug

Die Erfindung betrifft eine Getriebe-Kupplungs-Einheit für ein Zweirad-Kraftfahrzeug, mit einem Gehäuse, mit einer Eingangswelle, einer Ausgangswelle und einer Zwischenwelle, die zueinander parallel in dem Gehäuse drehbar gelagert sind, mit einer mit der Eingangswelle verbundenen, insbesondere als Fliehkraftkupplung ausgebildeten Anfahrkupplung, mit einem ersten, die Anfahr kupplung über die Zwischenwelle und eine Freilaufkupplung mit der Ausgangswelle verbindenden Getriebe-Antriebsweg und mit einem zweiten, die Anfahrkupplung über eine Gangwechselkupplung mit der Ausgangswelle verbindenden Getriebe-Antriebsweg, der ein Verhältnis von Ausgangswellendrehzahl zu Eingangswellendrehzahl festlegt, welches kleiner ist als das entsprechende Drehzahlverhältnis des ersten Getriebe-Antriebswegs.

Eine Gebriebe-Kupplungs-Einheit dieser Art ist aus der DE-U-75 28 755 bekannt. Es handelt sich um ein automatisch abhängig von der Motordrehzahl des Zweirad- Kraftfahrzeugs schaltendes Getriebe, bei welchem sowohl die Anfahrkupplung als auch die Gangwechselkupplung als Fliehkraftkupplung ausgebildet ist. Die Anfahrkupplung sitzt mit ihrem Fliehgewichtsträger auf einer als Achsverlängerung der Kurbelwelle der Brennkraftmaschine ausgebildeten Eingangswelle und treibt über ein Zahnradpaar und eine Freilaufkupplung eine achsparallel zur Eingangswelle in dem Gehäuse drehbar gelagerte Zwischenwelle. Die Gangwechselkupplung hat einen auf der Zwi-schenwelle drehbar gelagerten Fliehgewichtsträger, der über ein weiteres Zahnradpaar mit gegenüber dem ersten Zahnradpaar verringertem Untersetzungsverhältnis angetrieben wird. Die Gangwechselkupplung kuppelt damit bei höherer Drehzahl der Eingangswelle ein als die Anfahrkupplung und verbindet die Eingangswelle für den zweiten Gang über das zweite Zahnradpaar mit der Zwischenwelle. Die im ersten Gang die Antriebsverbindung über das erste Zahnradpaar herstellende Freilaufkupplung wird hierbei überholt. Die Zwischenwelle ihrerseits treibt über ein Ritzel ein auf einer Ausgangswelle sitzendes Zahnrad.

Aus der DE-A-33 02 844 ist es ferner bekannt, in einem Getriebegehäuse eines Zweirad-Kraftfahrzeugs achsparallel zur Kurbelwelle eine Ausgangswelle zu lagern, die über ein Zahnradpaar von einer auf einer Verlängerung der Kurbelwelle sitzenden Fliehkraft-Anfahrkupplung aus antreibbar ist. Das Zahnradpaar ist über eine Klauenkupplung mit der Ausgangswelle verbunden, über die die Antriebsverbindung des Zahnradpaars zur Ausgangswelle für das Starten der Brennkraftmaschine gelöst und statt dessen in Antriebsverbindung mit einem Kickstarthebel gebracht werden kann.

Es ist Aufgabe der Erfindung, eine Getriebe-Kupplungs-Einheit für ein Zweirad-Kraftfahrzeug zu schaffen, bei welcher der Zeitpunkt, zu welchem die Getriebegänge gewechselt werden können, vom Fahrer wahlweise bestimmt werden kann, ohne daß insbesondere beim Herunterschalten von einem höheren in einen niedrigeren Gang beim Auskuppeln der Gangwechselkupplung die Drehzahl der Brennkraftmaschine sich in unerwünschter Weise erhöht.

Ausgehend von der eingangs erläuterten Getriebe-Kupplungs-Einheit wird diese Aufgabe erfindungsgemäß dadurch gelöst, daß die Gangwechselkupplung als Reibungskupplung mit zwei gleichachsig auf einer der Wellen angeordneten Kupplungsorganen ausgebildet ist, von denen ein erstes Kupplungsorgan relativ zu dem zweiten Kupplungsorgan zwischen einer Einkuppelstellung und einer Auskuppelstellung axial beweglich geführt ist, federnd in die Auskuppelstellung vorgespannt ist und mittels einer Betätigungsvorrichtung gegen die Federvorspannung in die Einkuppelstellung bewegbar ist und daß das erste Kupplungsorgan mit dem zweiten Getriebe- Antriebsweg über ein Steilgewinde gekuppelt ist, dessen Windungssinn so gewählt ist, daß das in der Einkuppelstellung über die Reibungskupplung übertragene Drehmoment das erste Kupplungsorgan zum zweiten Kupplungsor gan hin zu schrauben sucht.

In einer solchen Getriebe-Kupplungs-Einheit bleibt die Gangwechselkupplung aufgrund der "Servowirkung" des Steilgewindes eingekuppelt, bis durch gewollte Erniedrigung der Motordrehzahl die federnde Vorspannung des ersten Kupplungsorgans, gegebenenfalls mittels der Betätigungsvorrichtung manuell unterstützt, ausreicht, um den Reibschluß der Kupplungsorgane zu lösen und die Gangwechselkupplung auszukuppeln. Unerwünschtes Überdrehen des Motors wird somit verhindert. Durch Auskuppeln der Gangwechselkupplung wird vom höheren auf den niedrigeren Gang, bie einem Zweiganggetriebe vom zweiten auf den ersten Gang zurückgeschaltet. Wurde die Motordrehzahl zum Lösen der Gangwechselkupplung so weit abgesenkt, daß die Freilaufkupplung überholt wird, so kann der Kraftschluß und damit die Antriebsverbindung zum Hinterrad des Kraftfahrzeugs durch bloßes Erhöhen der Motordrehzahl ruckfrei wiederhergestellt werden.

Beim Einkuppeln der Gangwechselkupplung, d.h. beim Wechseln vom niedrigen Gang in den höheren Gang kann es, insbesondere bei ungeübten Fahrern, zu einem Schaltstoß kommen. Um auch in dieser Fahrsituation weich einkuppeln zu können, ist in einer bevorzugten Ausgetaltung der Erfindung das zweite Kupplungsorgan in dem zweiten Getriebe-Antriebsweg drehfest aber axial beweglich gelagert und von einer Feder axial zum ersten Kupplungsorgan hin gegen einen relative zur Welle axial festen ersten Anschlag vorgespannt. Das von der Gangwechselkupplung übertragene Drehmoment wird damit von der Kraft der Feder bestimmt und nimmt mit wachsendem Federhub während des Einkuppelvorgangs zu. Einkuppelstöße, wie sie bei plötzlichem Einrücken der Kupplung ansonsten auftreten könnten, werden auf diese Weise zumindest stark gemildert.

Zweckmäßigerweise ist dem ersten Kupplungsorgan ein relativ zur Welle axial fester zweiter Anschlag zugeordnet, an dem das erste Kupplungsorgan in der Einkuppelstellung anliegt. Der zweite Anschlag begrenzt den Federhub und damit das maximale von der Gangwechselkupplung übertragbare Drehmoment. Es hat sich als zweckmäßig herausgestellt, wenn der zweite Anschlag durch wenigstens eine relativ zur Welle axial feste, jedoch auswechselbare Distanzscheibe gebildet ist, so daß Toleranzen der Kupplungsorgane oder der Feder durch Auswechseln unterschiedlich dicker Distanzscheiben ausgeglichen werden können. Die Montage und Justierung der Gangwechselkupplung kann ferner dadurch erleichtert werden, daß das erste Kupplungsorgan eine axial durchgehende Öffnung aufweist, durch die hindurch Abstandmeßgeräte für die Messung des axialen Abstands einer Bezugsfläche des ersten Kupplungsorgans von dem zweiten Anschlag einführbar sind. Die Abstandsmessung durch die Öffnung hindurch kann bei vormontierter Gangwechselkupplung erfolgen.

Eine weitere bevorzugte Ausgestaltung der Erfindung befaßt sich ebenfalls mit der Dämpfung von Einkuppelstößen der Gangwechselkupplung. Da die Kupplungsorgane der Gangwechselkupplung, wie im Getriebebau an und für sich üblich, in einem Ölbad angeordnet sind, kann die Einkuppelbewegung der Kupplungsorgane auf relativ einfache Weise dadurch gedämpft werden, daß eines der Kupplungsorgane eine zum anderen Kupplungsorgan offene Ringkammer aufweist, in die in der Einkuppelstellung ein Ringvorsprung des anderen Kupplungsorgans eintaucht. Zumindest eines der Kupplungsorgane umfaßt wenigstens einen Drosselkanal, über den die Ringkammer bei Annäherung an die Einkuppelstellung druckentlastbar ist. Der bei der Annäherung an die Einkuppelstellung in die Ringkammer eintauchende Ringvorsprung verdrängt das in der Ringkammer sich befindende Öl über den Drosselkanal, wodurch die Eintauchbewegung bedämpft und abgebremst wird. Bei dem Drosselkanal kann es sich um eine Nut in der Wand der Ringkammer oder des Ringvorsprungs handeln. Geeignet sind aber auch durch die Ringkammerwand oder den Ringvorsprung hindurchführende Bohrungen oder dergleichen.

In einer bevorzugten Ausgestaltung haben die Kupplungsorgane zueinander komplementäre kegelstumpfförmige Reibflächen. Die Reibflächen können damit nicht nur die vorstehend erwähnten Wände der Ringkammer und des Ringvorsprungs bilden, sondern es kann auch aufgrund der Kegelform ein vergleichsweise großes Reibdrehmoment bei vergleichsweise kleiner axialer Vorspannkraft übertragen werden.

Zu einer Getriebe-Kupplungs-Einheit mit vergleichsweise kompakten Abmessungen gelangt man, wenn die Gangwechselkupplung axial zwischen einem von der Anfahrkupplung angetriebenen, drehbar auf der Ausgangswelle gelagerten ersten Zahnrad und der mit einem zweiten Zahnrad versehenen, die Antriebswelle umschließenden Freilaufkupplung angeordnet ist, wobei die Zwischenwelle mit dem ersten und dem zweiten Zahnrad kämmende Zahnräder trägt und die Freilaufkupplung mit dem ersten Zahnrad verbindet. Sitzt die insbesondere als Fliehkraftkupplung ausgebildete Anfahrkupplung auf einer Verlängerung der Kurbelwelle, so kann das erste Zahnrad direkt oder über ein mit ihm verbundenes Stufenrad von einem Ausgangsritzel der Anfahrkupplung her angetrieben werden und die den Freilauf und die Gangwechselkupplung tragende Welle kann unmittelbar die Ausgangswelle des Getriebes bilden.

Bei dem ersten Kupplungsorgan der Gangwechselkupplung kann es sich um die treibende Komponente der Gangwechselkupplung handeln. Für eine definierte, leicht steuerbare Auskuppelcharakteristik ist es jedoch von Vorteil, wenn das erste Kupplungsorgan abtriebsseitig angeordnet ist, über das Steilgewinde also beispielsweise mit der Ausgangswelle verbunden ist.

Im folgenden wird die Erfindung anhand einer Zeichnung näher erläutert. Hierbei zeigt:

Fig. 1 einen Schnitt durch eine aus Brennkraftmaschine, Zweiganggetriebe und Kupplungsanordnung bestehende Antriebseinheit eines Zweirad-Kraftfahrzeugs bei eingelegtem ersten Gang;

Fig. 2 eine Shcnittansicht der Antriebseinheit, gesehen entlang einer Linie II-II in Fig. 1;

Fig. 3 eine Schnittansicht der Antriebseinheit, ähnlich der Schnittansicht in Fig. 1, jedoch bei eingelegtem zweiten Gang und

Fig. 4 eine detaillierte Schnittansicht einer Gangwechselkupplung der Antriebseinheit.

Die in den Figuren dargestellte Antriebseinheit für ein Zweirad-Kraftfahrzeug umfaßt eine Brennkraftmaschine 1, die mit einem manuell schaltbaren Zweiganggetriebe 3 zu einer Antriebseinheit verbunden ist. Die Brennkraftmaschine 1 hat wenigstens einen Zylinder 5, in welchem ein Hubkolben 7 verschiebbar ist, welcher über ein Pleuel 9 auf eine drehbar in einem Gehäuse 11 gelagerte Kurbelwelle 13 arbeitet. Auf einer Verlängerung 15 der Kurbelwelle 13 sitzt fest ein Fliehgewichtsträger 17 einer Fliehkraft-Anfahrkupplung 19, dessen Fliehgewichte 21 den Fliehgewichtsträger 17 oberhalb einer vorbestimmten Anfahrdrehzahl der Brennkraftmaschine 1 über Reibscheiben 23 mit einem drehbar auf der Achsverlängerung 15 gelagerten Kupplungsglocke 25 kuppeln. Unterhalb der Anfahrdrehzahl der Brennkraftmaschine ist die Fliehkraft-Anfahrkupplung 19 ausgekuppelt.

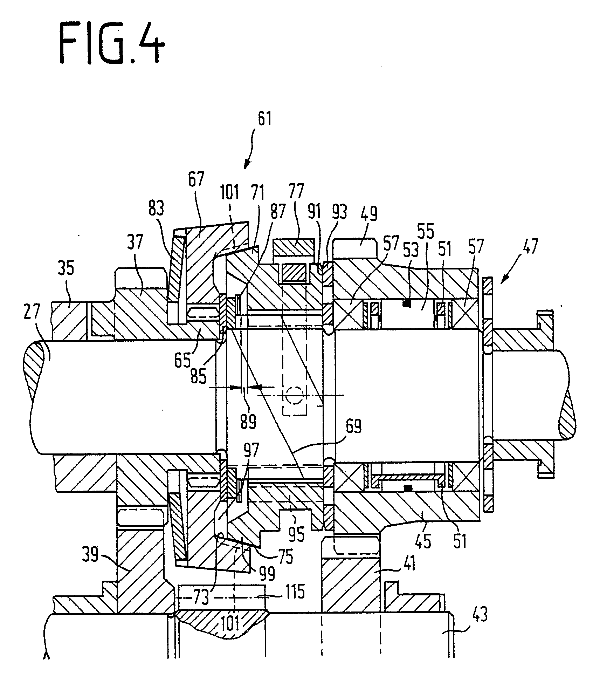

Achsparallel zur Kurbelwelle 13 ist in dem Gehäuse 11 eine Ausgangswelle 27 drehbar gelagert, die außerhalb des Gehäuses 11 ein Kettenrad 29 für die Antriebsverbindung zum Hinterrad des Zweiradfahrzeugs trägt und über zwei Getriebe-Antriebswege mit unterschiedlichem Untersetzungsverhältnis von einem mit der Kupplungsglocke 25 der Anfahrkupplung 19 fest verbundenen Ritzel 31 her angetrieben werden kann. Auf der Ausgangswelle 27 sitzt relativ zur Ausgangswelle 27 drehbar ein mit dem Ritzel 31 kämmendes Zahnrad 33, das über eine Hülse 35 drehfest mit einem seinerseits drehbar auf der Ausgangswelle 27 gelagerten Zahnrad 37 gekuppelt ist. Das Zahnrad 37 kämmt mit einem Zahnrad 39, welches zusammen mit einem Zahnrad 41 fest auf einer in dem Gehäuse 11 drehbar gelagerten, zur Ausgangswelle 27 parallelen Zwischenwelle 43 sitzt. Die Zahnräder 39, 41 verbinden über die Zwischenwelle 43 das Zahnrad 37 mit einer Mantelhülse 45 einer Freilaufkupplung 47, die das Antriebsdrehmoment von dem Zahnrad 41 über eine Verzahnung 49 der Mantelhülse 45 auf die Ausgangswelle 27 überträgt. Bei der Freilaufkupplung 47 kann es sich, wie am besten Fig. 4 zeigt, um eine Freilaufkupplung üblicher Bauart mit in einem Käfig 51 geführten und durch einen Federring 53 vorgespannten Sperrkörpern 55, beispielsweise in Form von Klinken oder Klemmrollen handeln. Mit 57 sind in Fig. 4 Wälzlager bezeichnet, die die Mantelhülse 45 an der Ausgangswelle 27 lagern.

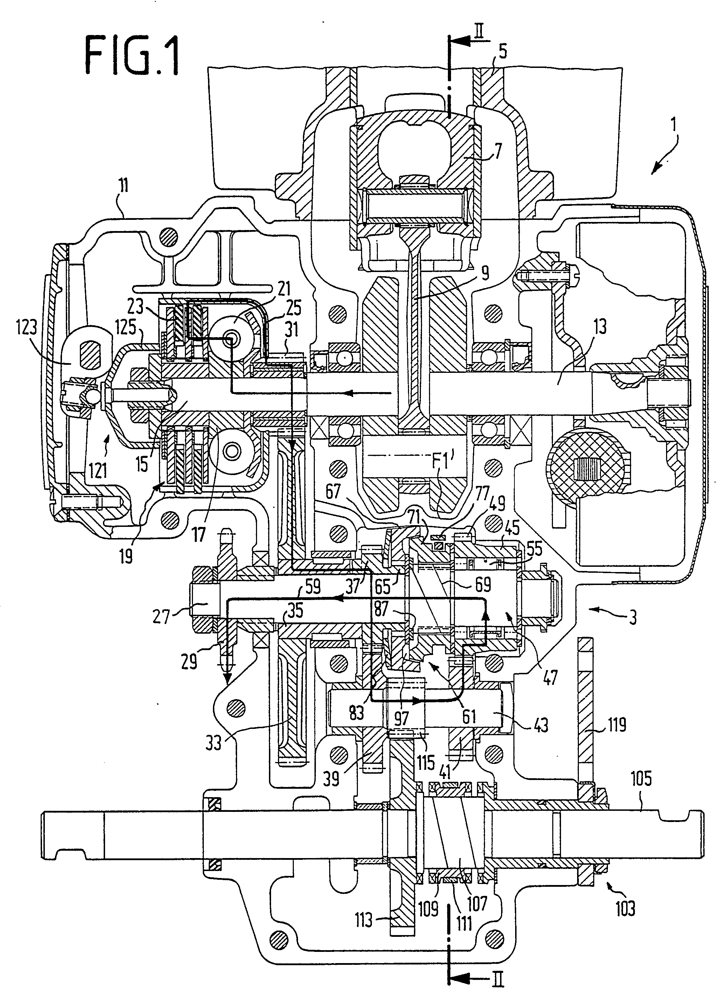

Der Antriebsweg des ersten Gangs verläuft, wie in Fig. 1 durch eine mit Pfeilen versehene Linie 59 dargestellt ist, von der Kurbelwelle 13 über die Anfahr-Fliehdraftkupplung 19, das Ritzel 31, das Zahnrad 33, die Hülse 35, die Zahnräder 37, 39, die Zwischenwelle 43, die Zahnräder 41, 49, die Klemmkörper 55 zur Ausgangswelle 27 und damit zum Kettenrad 29.

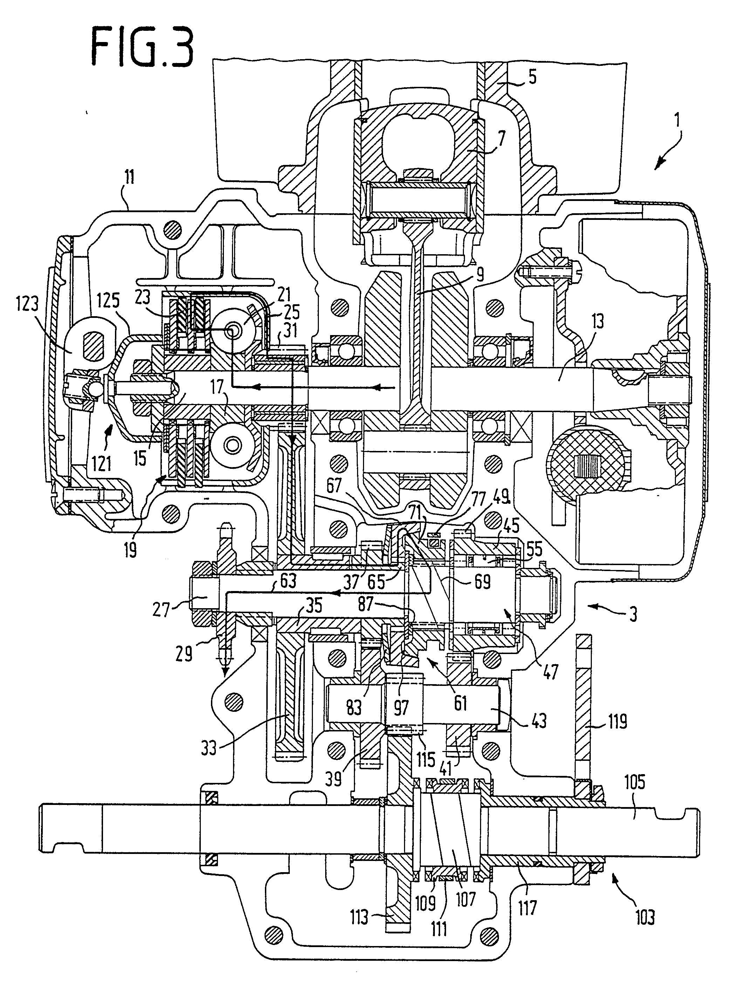

Um das Getriebe 3 in den zweiten, direkten Gang umschalten zu können, ist eine manuell betätigbare Gangwechselkupplung 61 vorgesehen, die, wie am besten Fig. 3 durch eine mit Pfeilen versehene Linie 63 zeigt, das von dem Zahnrad 33 über die Hülse 35 in einem zweiten Getriebe-Antriebsweg übertragene Drehmoment direkt auf die Ausgangswelle 27 und damit das Kettenrad 29 überträgt. Die Aus-gangswelle 27 überholt hierbei die Mantelhülse 45 der Freilaufkupplung 47, die aufgrund der nach wie vor über die Zahnräder 37, 39, 41 und 49 bestehenden Antriebsverbindung zur Hülse 35 mit geringerer Drehzahl angetrieben wird, als die über die Gangwechselkupplung 61 direkt mit der Hülse 35 gekuppelte Ausgangswelle 27.

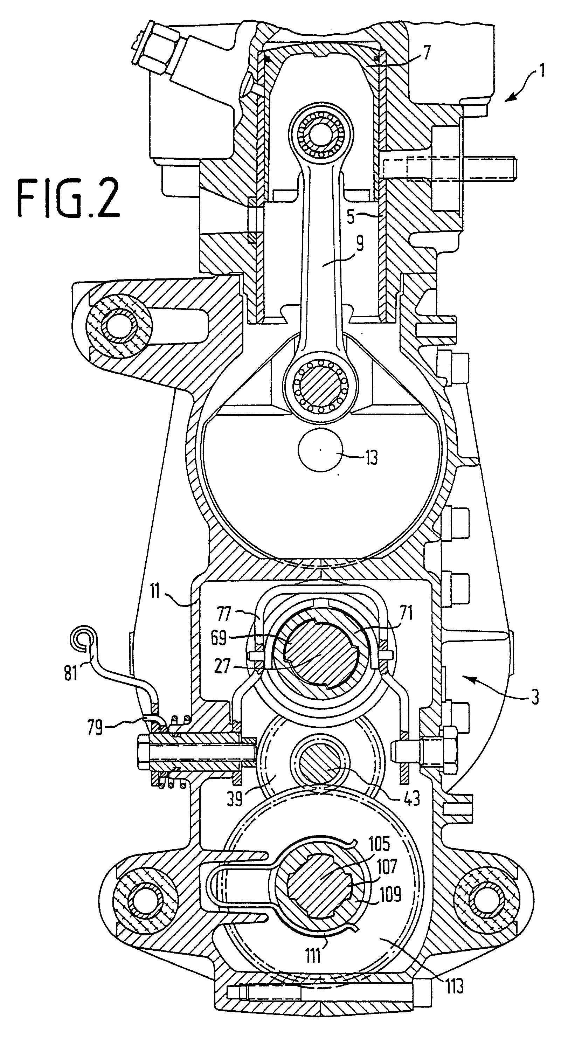

Die Gangwechselkupplung 61 ist als Reibungskupplung ausgebildet und umfaßt ein topfförmiges, drehfest aber axial verschiebbar auf einem Ansatz 65 des Zahnrads 37 geführtes Kupplungsorgan 67, welches mit einer über ein Steilgewinde axial beweglich mit der Ausgangswelle 27 gekuppelten, komplementären Kupplungsmuffe 71 zusammenwirkt. Die Kupplungsorgane 67, 71 haben, wie am besten Fig. 4 zeigt, kegelstumpfförmige Reibflächchen 73 bzw. 75, über die auch bei verhältnismäßig geringer axialer Anpreßkraft ein vergleichsweise hohes Reibdrehmoment übertragen werden kann. Über eine in dem Gehäuse 11 schwenkbar gelagerte Schaltgabel 77 läßt sich die Kupplungsmuffe 71 axial zwischen ihrer Einkuppelstel lung und ihrer Auskuppelstellung verschieben. Die Schaltgabel 77 wird, wie Fig. 2 zeigt, von einer Schenkelfeder 79 in die Auskuppelstellung vorgespannt, aus der sie über einen nicht näher dargestellten, an einem mit der Schaltgabel 77 verbundenen Hebel angreifenden Bowdenzug oder dergleichen zum Kupplungsorgan 67 hin gegen die Federvorspannung verstellt werden kann. Der Windungssinn der Steilgewindes 69 ist hierbei so gewählt, daß die Kupplungsmuffe 71 von dem über die Reibfläche 73, 75 übertragenen Reibdrehmoment zum Kupplungsorgan 67 hin geschraubt wird, so daß sich ein Selbstverstärkungseffekt der Anpreßkraft ergibt. Die Steigung des Steilgewindes 69 ist so bemessen, daß der Selbstverstärkungseffekt ausreicht, die Gangwechselkupplung 61 eingekuppelt zu halten, selbst wenn die auf den Hebel 81 über den Bowdenzug ausgeübte Schaltkraft aufgehoben oder der Schaltmechanismus in die dem ersten Gang zugeordnete Schaltstellung bereits für eine Vorwahl des ersten Gangs in die Auskuppelstellung zurückbewegt wird. Der Selbsthalteeffekt wird erst aufgehoben, wenn durch Zurückdrehen des Gasdrehgriffs die Leistung der Brennkraftmaschine 1 und damit dderen Drehmoment bis auf einen Wert gemindert wird, bei welchem die Rückholkraft der Schenkelfeder 79 die Selbstverstärkungskraft des Steilgewindes 69 übersteigt und die Schaltmuffe 71 in die Auskuppelstellung bewegt. Durch geeignete Abstimmung des Steilgewindes 69 und der Federkraft der Schenkelfeder 79 kann verhindert werden, daß sich die Drehzahl der Brennkraftmaschine 1 beim Zurückschalten vom zweiten auf den ersten Gang in unerwünschter Weise überhöht. Ein Schaltstoß beim Zurückschalten ergibt sich nicht, wenn die Motordrehzahl, bei welcher die Gangwechselkupplung 61 ausgekuppelt wird, nach Untersetzung durch die Zahnräder 37, 39, 41 und 49 niedriger ist als die Drehzahl der Ausgangswelle 27. In diesem Zustand wird die Freilaufkupplung 47 nach wie vor überholt und schließt erst durch erneute Drehzahlerhöhung den Antriebsweg des ersten Gangs. Die Kupplungsmuffe 71 kann durch die Schaltgabel 77 zur Verstärkung des Selbsthalteeffekts gegebenenfalls geringfügig gebremst sein.

Um Einschaltstöße beim Schalten vom ersten auf den zweiten Gang zu mindern, ist das Kupplungsorgan 67 axial verschiebbar auf dem Ansatz 65 geführt und wird von einer Tellerfeder 83 zur Kupplungsmuffe 71 hin gegen einen fest mit der Ausganswelle 27 verbundenen Anschlag 85 in Form einer Ringscheibe oder dergleichen vorgespannt. Die Tellerfeder 83 bestimmt die Axialkraft, mit der die Reibflächen 73, 75 gegeneinander gedrückt werden und nimmt, ausgehend von einem Anfangswert zu, wenn im Verlauf der Einkuppelbewegung der Kupplungsmuffe 71 das Kupplungsorgan 67 von dem Anschlag 85 axial abgehoben wird. Die Gangwechselkupplung 61 kuppelt damit "weich" ein. Der Maximalhub der Tellerfeder 83 wird durch Distanzscheiben 87 begrenzt, die einen Endanschlag für die Kupplungsmuffe 71 in der Einkuppelstellung bilden. Durch Auswechseln unterschiedlich dicker Distanzscheiben 87 läßt sich der Maximalhub 89 der Kupplungsmuffe 71 und damit die Kupplungscharakteristik der Gangwechselkupplung 61 justieren. Die Kupplungsmuffe 71 liegt in ihrer Auskuppelstellung mit einer Bezugsfläche 91 an einer Anschlagscheibe 93 an. Um den Hub 89 im vormontierten Zustand der Gangwechselkupplung 61 messen zu können, ist die Schaltmuffe 71 mit einer bei 95 angedeuteten axialen Bohrung versehen, durch die hindurch mit einem Abstandtaster oder dergleichen der Abstand der Distanzscheiben 87 von der Bezugsfläche 91 gemessen werden kann.

Die Zahnräder des Getriebes 3 einschließlich der Gangwechselkupplung 61 laufen in dem Gehäuse 11 in einem Ölbad. Aufgrund der topfförmigen Gestalt des Kupplungsorgans 67 bildet dieses eine Ringkammer 97, in die ein Ringansatz 99 der Kupplungsmuffe 71 im Verlauf der Einkuppelbewegung eintaucht. Das beim Eintauchen des Ringansatzes 99 verdrängte Ölvolumen strömt über Drosselkanäle ab, die in Form von Nuten 101 in den Reibflächen, beispielsweise der Reibfläche 73, vorgeschen sind. Durch den gedrosselten Abfluß des Öls aus dem Ringraum 97 wird die einkuppelbewegung der Kupplungsmuffe 71 gebremst, wodurch Schaltstöße start gemindert werden. Anstelle der Nuten können selbstverständlich auch Bohrungen in dem Kupplungsorgan 67 bzw. der Kupplungsmuffe 71 vorgesehen sein.

Die Antriebseinheit umfaßt ferner einen Pedalantrieb 103, über den die Brennkraftmaschine 1 gestartet und das Zweirad-Kraftfahrzeug einerseits gebremst und andererseits gegebenenfalls ohne Motorantrieb bewegt werden kann. Der Pedalantrieb 103 umfaßt eine in dem Gehäuse 11 drehbar gelagerte Pedalwelle 105, an deren Enden nicht näher dargestellte Pedale angebracht sind. Auf einem Gewinde 107 der Pedalwelle 105 sitzt mit einem komplementären Gewinde eine Kupplungsmuffe 109, die von einer am Gehäuse 11 abgestützten Schenkelfeder 111 gebremst wird. Abhängig vom Drehsinn der Pedalwelle 105 wird die Kupplungsmuffe 109 bei einer Drehung in Vorwärtsrichtung gegen ein frei drehbar auf der Pedalwelle 105 gelagertes Zahnrad 113 gedreht, welches mit einem fest auf der Zwischenwelle 43 sitzenden Ritzel 115 kämmt, bzw. bei einer Drehung in Rückwärtsrichtung wird die Kupplungsmuffe 109 gegen eine drehbar die Pedalwelle 105 umschließende Hülse 117 geschraubt, die außerhalb des Gehäuses 11 einen Hebel 119 zur Betätigung einer nicht näher dargestellten Hinterradbremse des Fahrzeugs trägt. Bei Betätigung der Pedale in Rückwärtsrichtung wirken diese somit im Sinne einer Rücktrittbremse. In Vorwärtsrichtung treiben die Pedale über das Zahnrad 113 das Ritzel 115, die Zahnräder 39 und 37 das Kettenrad 29. Da die beim Pedalantrieb die Kupplungsglocke 25 der Fliehkraft-Anfahrkupplung 19 und nicht deren Fliehgewichtsträger 17 angetrieben wird, wird die Brennkraftmaschine im Fahrradbetrieb des Zweirad-Kraftfahrzeugs nicht angetrieben. Zum Anlassen der Brennkraftmaschine 1 ist an der Fliehdraft-Anfahrkupplung 19 eine Einrückvorrichtung 121 vorgesehen, über die die Fliehkraftkupplung 19 manuell eingekuppelt werden kann. Die Einrückvorrichtung 121 umfaßt einen beispielsweise über einen Bowdenzug betätigbaren Hebel 123, der über eine axial zur Kurbelwelle 13 verschiebbare Glocke 125 die Reibbeläge 23 gegeneinander drückt und so den Kraftweg des von der Pedalwelle 105 aus angetriebenen Zahnrads 37 über das Zahnrad 33 und die Anfahrkupplung 19 zur Kurbelwelle 13 der Brennkraftmaschine 1 schließt.

In der vorstehend erläuterten Ausgestaltung ist die Pedalwelle über ein Zahnradgetriebe mit der Brennkraftmaschine verbunden. Es sind jedoch auch Ausführungsformen möglich, bei welchen die Pedalwelle über eine zweite Kette, die gegebenenfalls außerhalb des Gehäuses 11 angeordnet ist, mit der Brennkraftmaschine verbunden ist. In diesen Ausführungsformen treibt die Pedalwelle zweckmäßigerweise über die zweite Kette indirekt ebenfalls das Kettenrad 29, wobei das Kettenrad dann über eine gleichzeitig mit der Einrückvorrichtung 121 zu betätigende zweite Startkupplung direkt mit dem Zahnrad 33 kuppelbar ist. Die zweite Startkupplung kann beispielsweise axial zwischen dem Kettenrad und dem Zahnrad 33 in einer Aufnahme des Gehäuses 11 vorgesehen sein. Die Betätigung der Einrückvorrichtung 121 und der zweiten Startkupplung kann über einen Bowdenzug mit geteilter Hose erfolgen.

**Ansprüche**

1. Getriebe-Kupplungs-Einheit für ein Zweirad-Kraftfahrzeug,
mit einem Gehäuse (11),
mit einer Eingangswelle (15), einer Ausgangswelle (27) und einer Zwischenwelle (43) die zueinander parallel in dem Gehäuse (1) drehbar gelagert sind,
mit einer mit der Eingangswelle (15) verbundenen, insbesondere als Fliehkraftkupplung ausgebildeten Anfahrkupplung (19),
mit einem ersten, die Anfahrkupplung (19) über die Zwischenwelle (43) und eine Freilaufkupplung (47) mit der Ausganswelle (27) verbindenen Getriebe-Antriebsweg (31, 33, 37, 39, 41, 49) und
mit einem zweiten, die Anfahrkupplung (19) über eine Gangwechselkupplung (61) mit der Ausgangswelle (27) verbindenden Gebriebe-Antriebsweg (31, 33, 65), der ein Verhältnis von Ausganswellendrehzahl zu Eingangswellendrehzahl festlegt, welches kleiner ist als das entsprechende Drehzahlverhältnis des ersten Getriebe-Antriebswegs (31, 33, 37, 39, 41, 49), **dadurch gekennzeichnet,** daß die zwei gleichachsig auf einer der Wellen (27) angeordneten Kupplungsorganen (67, 71) ausgebildet ist, von denen ein erstes Kupplungsorgan (71) relativ zu dem zweiten Kupplungsorgan (67) zwischen einer Einkuppelstellung und einer Auskuppelstellung axial beweglich geführt ist, federnd in die Auskuppelstellung vorgespannt ist und mittel einer Betätigungsvorrichtung (77, 81) gegen die Federvorspannung in die Einkuppelstellung bewegbar ist und daß das erste Kupplungsorgan (71) mit dem zweiten Getriebe-Antriebsweg (31, 33, 65) über ein Steilgewinde (69) gekuppelt ist, dessen Windungssinn so gewählt ist, daß das in der Einkuppelstellung über die Reibungskupplung übertragene Drehmoment das erste Kupplungsorgan (71) zum zweiten Kupplungsorgan (67) hin zu schrauben sucht.

2. Einheit nach Anspruch 1, dadurch gekennzeichnet, daß das zweite Kupplungsorgan (67) in dem zweiten Getriebe-Antriebsweg (31, 33, 65) drehfest, aber axial beweglich gelagert und von einer Feder (83) axial zum ersten Kupplungsorgan (71) hin gegen einen relativ zur Welle (27) axial festen ersten Anschlag (85) vorgespannt ist.

3. Einheit nach Anspruch 2, dadurch gekennzeichnet, daß dem ersten Kupplungsorgan (71) ein relativ zur Welle (27) axial fester zweiter Anschlag (87) zugeordnet ist, an dem das erste Kupplungsorgan (71) in der Einkuppelstellung anliegt.

4. Einheit nach Anspruch 3, dadurch gekennzeichnet, daß der zweite Anschlag durch wenigstens eine relativ zur Welle axial feste, jedoch auswechselbare Distanzscheibe (87) gebildet ist.

5. Einheit nach Anspruch 4, dadurch gekennzeichnet, daß das erste Kupplungsorgan (71) eine axial durchgehende Öffnung (95) aufweist, durch die hindurch Abstandsmeßgeräte für die Messung des axialen Abstands einer Bezugsfläche (91) des ersten Kupplungsorgans (71) von dem zweiten Anschlag (87) einführbar sind.

6. Einheit nach einem der Ansprüche 1 bis 5, dadurch gekennzeichnet, daß die Kupplungsorgane (67, 71) in einem Ölbad angeordnet sind, daß eines (67) der Kupplungsorgane eine zum anderen Kupplungsorgan (71) offene Ringkammer (97) aufweist, in die in der Einkuppelstellung im Ringvorsprung (99) des anderen Kupplungsorgans (71) eintaucht und daß zumindest eines der Kupplungsorgane (67, 71) wenigstens einen Drosselkanal (100) umfaßt, über den die Ringkammer (97) bei Annäherung an die Einkuppelstellung druckentlastbar ist.

7. Einheit nach Anspruch 6, dadurch gekennzeichnet, daß der Drosselkanal als Nut (101) in der Wand der Ringkammer (97) oder/und des Ringsvorsprungs (99) ausgebildet ist.

8. Einheit nach einem der Ansprüche 1 bis 7, dadurch gekennzeichnet, daß die Kupplungsorgane (67, 71) zueinander komplementäre kegelstumpfförmige Reibflächen (73, 75) haben.

9. Einheit nach einem der Ansprüche 1 bis 8, dadurch gekennzeichnet, daß die Gangwechselkupplung (61) axial zwischen einem von der Anfahrkupplung (19) angetriebenen, drehbar auf der Ausgangswelle (27) gelagerten ersten Zahnrad (37) und der mit einem zweiten Zahnrad (49) versehenen, die Ausgangswelle (27) umschließenden Freilaufkupplung (47) angeordnet ist und daß die Zwischenwelle (43) mit dem ersten (37) und zweiten (49) Zahnrad kämmende Zahnräder (39, 41) trägt und die Freilaufkupplung (47) mit dem ersten Zahnrad (37) verbindet.

10. Einheit nach Anspruch 9, dadurch gekennzeichnet, daß das erste Kupplungsorgan (71) über das Steilgewinde (69) mit der Ausgangswelle (27) verbunden ist und daß das erste Zahnrad (37) einen Hülsenansatz (65) aufweist, auf dem das zweite Kupplungsorgan (67) drehfest aber axial verschiebbar geführt ist.

# FIG.1

FIG.2

FIG.3

# FIG.4